# EUROPÄISCHE PATENTSCHRIFT

(11) **EP 0 918 494 B1**
(45) Veröffentlichungstag und Bekanntmachung des Hinweises auf die Patenterteilung: **21.11.2001**
(21) Anmeldenummer: 97940002.5
(22) Anmeldetag: 16.07.1997
(51) Int. Cl.: A61C 9/00

(54) **ZAHNMEDIZINISCHER ABDRUCKLÖFFEL**
DENTAL IMPRESSION CURETTE
CURETTE POUR EMPREINTES DENTAIRES

(30) Priorität: 16.07.1996 DE 19628682
(43) Veröffentlichungstag der Anmeldung: 02.06.1999
(73) Patentinhaber: Schedler, Markus, 67714 Waldfischbach (DE)
(72) Erfinder: SCHEDLER, Markus, D-67714 Waldfischbach (DE); PLATT, Hubertus, D-60320 Frankfurt am Main (DE)
(74) Vertreter: Kruspig, Volkmar, Dipl.-Ing.
(86) Internationale Anmeldenummer: EP9703800
(87) Internationale Veröffentlichungsnummer: WO9802111

(56) Entgegenhaltungen:
- BE-A- 569 435
- DE-A- 4 116 190
- DE-C- 690 021
- US-A- 1 411 505
- US-A- 2 315 660
- US-A- 2 568 072
- US-A- 3 045 349
- US-A- 5 370 533
- US-A- 5 551 872

## Beschreibung

Die Erfindung betrifft einen zahnmedizinischen Abdrucklöffel zur Herstellung von Zahnabdrücken mittels einer härtbaren Abdruckmasse, mit einer der Form des menschlichen Ober- bzw. Unterkiefers angepaßten Abdruckschale zur Aufnahme der Abdruckmasse gemäß Oberbegriff des Patentanspruchs.

Für die Herstellung von Zahnabdrücken sind starre Abdrucklöffel bekannt, wobei zunächst eine Abformung der Zähne im Mund des Patienten mit Abformmaterial vorgenommen wird. Anschließend erfolgt ein Ausgießen der erhaltenen Negativform mit Gips oder ähnlichem. Danach wird der Abformlöffel zerlegt, um das Gipsmodell möglichst unbeschadet aus der Abformmasse herauszulösen.

Zu diesem Zweck schlägt die DE 17 66 510 vor, den Abdrucklöffel aus Kunststoff herzustellen und den Randbereich der Abdruckschale derart auszubilden, daß die ausgehärtete Abdruckmasse durch stückweises Wegbrechen von Löffelteilchen aus dem Abdrucklöffel entfernbar ist. Dies führt jedoch dazu, daß ein derartiger Abdrucklöffel nur einmal zu verwenden ist. Darüber hinaus ist es notwendig, eine Reihe derartiger Abdrucklöffel bereitzustellen, um je nach den anatomischen Gegebenheiten des Kieferbereichs des jeweiligen Patienten einen passenden Abdrucklöffel zur Verfügung zu haben.

Es ist Aufgabe der Erfindung, einen wiederverwendbaren, universellen zahnmedizinischen Abdrucklöffel anzugeben, der mittels einer härtbaren Abdruckmasse die Herstellung von verbesserten Zahnabdrücken auf einfache Weise ermöglicht.

Die Lösung der Aufgabe der Erfindung erfolgt mit einem Gegenstand nach den Merkmalen des Patentanspruchs.

Erfindungsgemäß ist eine an der äußeren oder inneren Seitenwandung des Abdrucklöffels lösbar angebrachte Speicherabsaug-Einrichtung sowie ein elastisches und/oder verformbares Dichtungs- und Ausgleichselement vorgesehen.

Durch diese Maßnahmen werden negative Einflüsse bei der Abdrucknahme, welche durch eindringenden Speichel verursacht sind, vermieden.

Für die Abdrucknahme am Unterkiefer ist es vorteilhaft, die Grundplatte mit einer etwa U-förmigen Zungenaussparung zu versehen. Der Randbereich dieser Zungenaussparung wird durch eine innere Seitenwandung begrenzt, welche zumindest teilweise hinter der jeweiligen Zahnreihe verläuft. Durch die innere Seitenwandung wird die Zunge bzw. die Schleimhaut wirkungsvoll von der Abdruckmasse ferngehalten und die Abdruckschale wird auf ein minimales Volumen begrenzt. Dies ist materialsparend und erhöht die Genauigkeit des Abdrucks.

Um ein einfaches Einsetzen bzw. Entnehmen des Abdrucklöffels bei der Abdrucknahme zu gewährleisten, kann die Grundplatte eine sich von der Zahnreihe auswärts aus dem Mund heraus erstreckende Handhabe aufweisen.

Auch ist die innere und/oder äußere Seitenwandung flexibel an die Form und/oder Größe des Kieferbereichs des Patienten anpaßbar ausgebildet.

Ebenso weist der bei der Abdrucknahme mit der Schleimhaut bzw. dem Zahnfleisch in Kontakt kommende Randbereich der inneren und/oder äußeren Seitenwandung und der Grundplatte ein elastisches und/oder verformbares Dichtungs- und Ausgleichselement zur verbesserten Adaption auf. Damit ist es möglich, den gesamten Randbereich der Abdruckschale in paßgenauen und abdichtenden Kontakt mit der Schleimhaut bzw. dem Zahnfleisch zu bringen. Hierbei wird vor der Abdrucknahme der unbefüllte Abdrucklöffel an den entsprechenden Kieferbereich des Patienten angepaßt bzw. probehalber eingesetzt. Anschließend erst wird der Abdrucklöffel mit dem Abdruckmaterial befüllt. Hierbei ist durch die paßgenaue Ausgestaltung der Abdruckschale nur eine geringe Menge von Abdruckmaterial erforderlich.

Eine besonders gute Dichtwirkung und gleichzeitig formstabile Anpassung des Randbereichs an die Schleimhaut bzw. das Zahnfleisch bietet Thermoplast, selbsthärtendes Silikon oder nicht härtende Kunststoff. Selbstverständlich ist auch jedes andere verformbare und/oder härtbare Material für das Dichtungs- oder Ausgleichselement geeignet.

Das Dichtungs- und Ausgleichselement kann in einer Aufnahmeeinrichtung an der inneren und äußeren Seitenwandung und der Grundplatte eingebracht werden. Hierbei kann die Aufnahmeeinrichtung insbesondere eine am Randbereich der inneren und äußeren Seitenwandung und der Grundplatte umlaufende Rinne aufweisen.

Die Grundplatte und/oder die innere und/oder äußere Seitenwandung weist mindestens eine Absaugöffnung zum Erzeugen eines Unterdrucks zwischen der Schleimhaut bzw. dem Zahnfleisch und der Abdruckschale auf. Sie kann hierbei über mindestens einen Absaugkanal in der Grundplatte bzw. in der inneren bzw. äußeren Seitenwandung mit einem Absauganschluß für eine Pumpeinrichtung verbunden sein. Mittels der Pumpeinrichtung ist es möglich, ein Vakuum zwischen der Abdruckschale und der Schleimhaut bzw. dem Zahnfleisch auszubilden, so daß sich die Anlage des Abdrucklöffels im nicht mit Abdruckmasse befüllten Zustand verbessert.

Besonders vorteilhaft ist es, wenn der Absauganschluß für die Pumpeinrichtung an der Handhabe selbst ausgebildet ist.

Um nun die Abdruckmasse der Abdruckschale zuzuführen, ist in der Grundplatte und/oder in der inneren und/oder äußeren Seitenwandung mindestens eine Einspritzöffnung vorgesehen, die über einen Einspritzkanal in der Grundplatte und/oder äußeren Seitenwandung mit einem Anschluß für eine Abdruckmasse-Einspritzeinrichtung verbunden sein kann.

Mittels vorstehender Maßnahmen ist es leicht möglich, in den sich bereits in Abdruckposition befindlichen und unbefüllten Abdrucklöffel vom Backenzahnbereich her eine viskose, aushärtbare Abdruckmasse einzuspritzen. Der für den Patienten oftmals unangenehm hohe Druck, der durch den Zahnarzt aufgewendet werden muß, um einen bereits befüllten Abdrucklöffel zur Abdrucknahme auf die Zahnreihe aufzupressen, ist nicht notwendig. Weiterhin ist von Vorteil, daß die Abdruckmasse beim Einspritzen eine hohe Viskosität aufweist und somit gut in die Zahnzwischenräume und in Vertiefungen im Zahnmaterial eindringen kann. Die Herstellung äußerst genauer Zahnabdrücke ist somit leicht möglich.

Bei der Abdrucknahme ist es oft störend, daß die Zunge aber auch der Wangenbereich in unmittelbaren Kontakt mit dem Abdrucklöffel treten. Um diesen unmittelbaren Kontakt auszuschließen, kann die Abdruckschale einen Weichteilschutz zum Abdecken bzw. Fernhalten von Zunge und/oder Wangenbereich aufweisen. So kann die Grundplatte und/oder die innere Seitenwandung einen Zungenschild und die äußere Seitenwandung einen Wangenschild aufweisen.

Bekanntermaßen ist die im Mundbereich natürliche Speichelbildung bei der Abdrucknahme störend und führt nicht selten zu verschlechterten Abdruckergebnissen.

Gemäß dem Grundgedanken der Erfindung weist deshalb die innere Seitenwandung und/oder äußere Seitenwandung für die Abdrucknahme am Unterkiefer eine an dem der Zunge zugewandten Innenrandbereich und/oder an dem der Wange bzw. der Lippe zugewandten Außenwandbereich verlaufende Speichelabsaugeinrichtung auf. Auf diese Weise kann der bei der Abdrucknahme auftretende Speichel leicht entfernt werden.

Die Speichelabsaugeinrichtung kann einen Speichelabsaugkanal mit einer Vielzahl von Absaugöffnungen aufweisen. Hierbei ist denkbar, daß ein mit dem Speichelabsaugkanal verbundener Anschluß für die Speichelabsaugpumpe an der Handhabe ausgebildet ist. Das Anschließen einer derartigen Absaugpumpe wird somit erleichtert.

Die Speichelabsaugeinrichtung lösbar mit der Abdruckschale verbunden. Die Speichelabsaugeinrichtung kann hierbei gelenkig abnehmbar mit der Abdruckschale verbunden sein. Dadurch, daß die Abdruckschale zusammen mit oder getrennt von der Speichelabdruckeinrichtung einsetzbar ist, ergeben sich eine Reihe von Kombinations- und Anwendungsmöglichkeiten.

So kann z. B. die Speichelabsaugeinrichtung bei der Präparation an Zähnen eingelegt werden, wodurch der Zahn trockengehalten wird und Wange und Zunge abgehalten werden, ohne daß eine Hilfsperson nötig ist.

Um eine dichtende Verbindung zwischen der Speichelabsaugeinrichtung und der Abdruckschale zu schaffen, weist die Speichelabsaugeinrichtung eine Nut zur Aufnahme des Randbereichs der Abdruckschale auf. Die Nut kann hierbei eine Hinterschneidung und der Randbereich der Abdruckschale einen Rastvorsprung aufweisen, wobei der Rastvorsprung mit der Hinterschneidung in Eingriff bringbar ist, um eine lösbare Verbindung zwischen der Speichelabsaugeinrichtung und der Abdruckschale zu schaffen. Hierbei ist besonders vorteilhaft, daß eine fluiddichtende Einrichtung zwischen der Speichelabsaugeinrichtung und der Abdruckschale angeordnet ist.

Es ist jedoch auch denkbar, daß die Speichelabsaugeinrichtung mittels einer Rast-, Klemm-, Schraub- oder dergleichen lösbaren Verbindungseinrichtung an der Abdruckschale angeordnet ist.

Um eine besonders gute Anpaßbarkeit der Speichelabsaugeinrichtung an den Kieferbereich des Patienten zu gewährleisten, kann zum einen die Speichelabsaugeinrichtung flexibel ausgebildet sein, so daß sie an die Form- und/oder Größe der Abdruckschale und dem Kieferbereich des Patienten angepaßt werden kann. Zum anderen kann das Dichtungs- und Ausgleichselement an der Speichelabsaugeinrichtung entlang angeordnet sein. Hierbei ist an der Speichelabsaugenrichtung die Einrichtung zur Aufnahme des Dichtungs- und Ausgleichselements vorgesehen. Darüber hinaus kann die Speichelabsaugeinrichtung den Weichteilschutz zum Fernhalten oder Abdecken von Zunge oder Wangenbereich aufweisen.

Um die Abdruckschale bei der Abdrucknahme in der Abdruckposition fixieren zu können, ist eine Fixierungseinrichtung zweckmäßig. Diese kann bei der Abdruckschale für eine Unterkieferabdrucknahme als eine an der Grundplatte und/oder äußeren Seitenwandung angreifende Kinnklemme ausgebildet sein. Der Abdrucklöffel für eine Oberkieferabdrucknahme hingegen kann ein an der Grundplatte und/oder äußeren Seitenwandung angreifendes Fixierungsband aufweisen, das über den Schädel des Patienten verläuft.

Die Erfindung sei nachstehend anhand eines Ausführungsbeispiels sowie unter Zuhilfenahme von Figuren näher erläutert.

Es zeigen:
- Fig. 1: eine Ausführungsform eines erfindungsgemäß ausgebildeten Abdrucklöffels für die Unterkieferabdrucknahme in im Backenzahnbereich abgeschnittener schematisch-perspektivischer Ansicht; und
- Fig. 2: eine schematische Teil-Schnittansicht des Abdrucklöffels nach Fig. 1, wobei sich der Abdrucklöffel in Abdrucknahmeposition befindet.

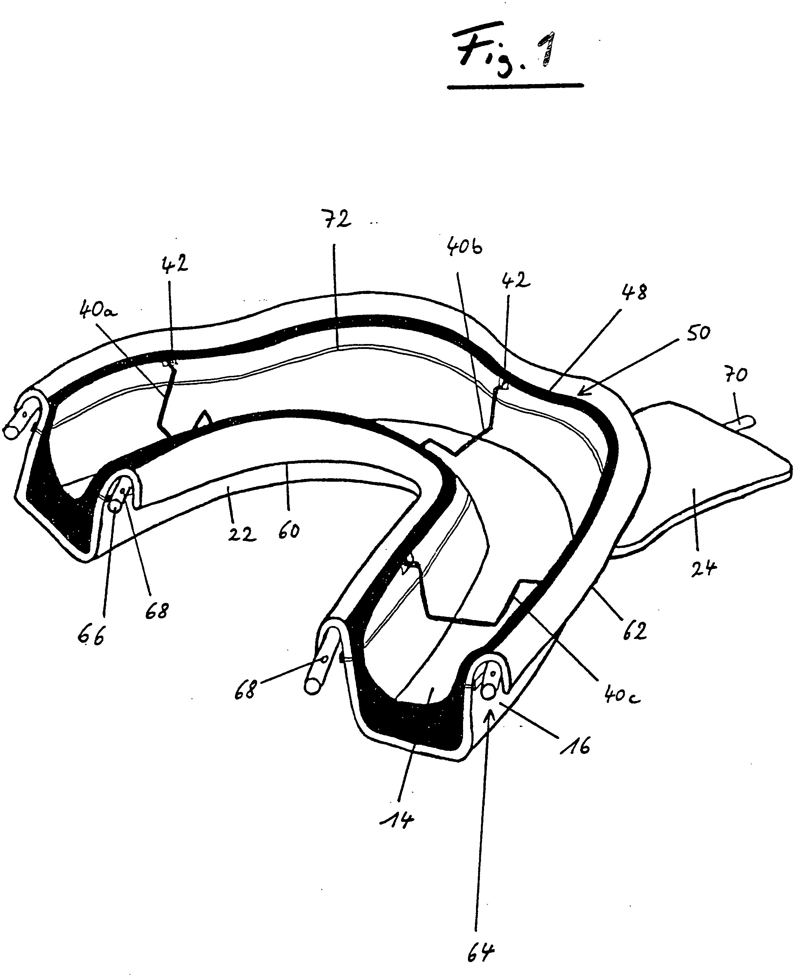

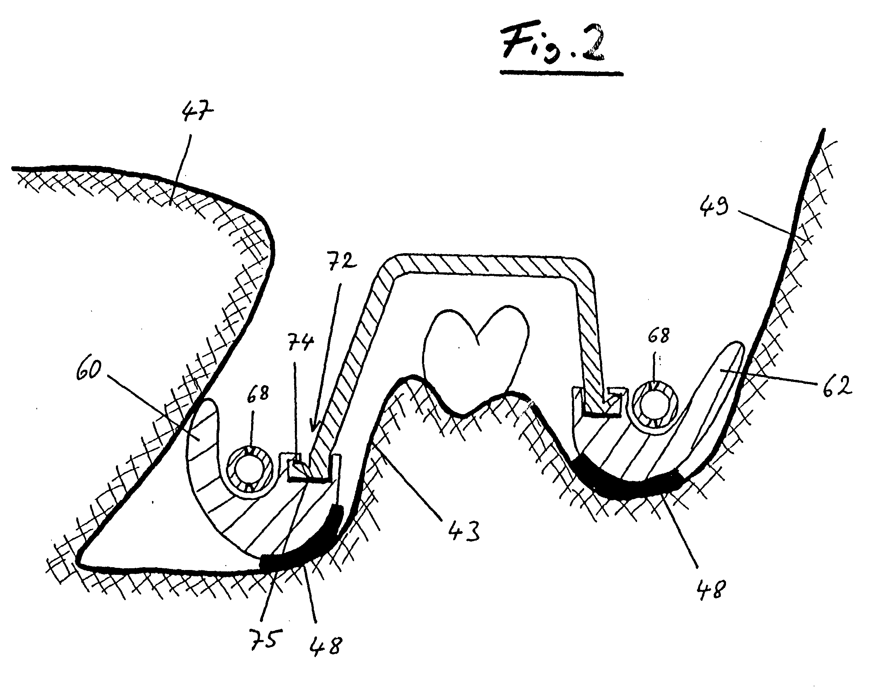

In Fig. 1 ist ein Abdrucklöffel für die Abdrucknahme am Unterkiefer in am Backenzahnbereich abgeschnittener schematisch-perspektivischer Ansicht dargestellt. Fig. 2 zeigt eine Teil-Querschnittansicht desselben, wobei der Abdrucklöffel in Abdrucknahmeposition, d.h. auf die Zahnreihe des Unterkiefers aufgesetzt dargestellt ist.

Sowohl die innere als auch die äußere Seitenwandung 22 und 16 sind aus einem verformbaren Kunststoffmaterial hergestellt. Ebenso können die Seitenwandungen aus einem federelastischen Stahl gefertigt werden. Damit der Abdrucklöffel bei elastischen bzw. verformbaren Seitenwänden eine für die Abdrucknahme notwendige Stabilität bewahrt, sind zwischen beiden Seitenwandungen 22 und 16 drei Stege 40a - c über den Kauflächen angeordnet, und zwar ein Steg im Schneidezahnbereich und zwei Stege im vorderen Backenzahnbereich. Die Stege 40a - c sind in entsprechende Aufnahmeeinrichtungen 42 in den Seitenwandungen 22 und 16 eingesteckt, so daß die Stege 40a - c sowohl auf Druck als auch auf Zug stabil und fest mit den Seitenwandungen 22 und 16 verbunden sind. Bei Bedarf, d.h. zur Anpassung des Abdrucklöffels an den Unterkiefer des Patienten, können die Stege 40a - c leicht entnommen und nach der Anpassung auch wieder eingesteckt werden. Bei der Entnahme des ausgehärteten Abdruckmaterials lassen sich die Stege ebenfalls leicht lösen.

Der in Fig. 1 und 2 dargestellte Abdrucklöffel besitzt eine Abdruckschale 10, bei der die Seitenwandungen 22 und 16 in ihrem der Grundplatte 14 unmittelbar angrenzenden Bereich mit der Grundplatte 14 fest verbunden sind. Der Randbereich der inneren und äußeren Seitenwandung 22 und 16 ist an dem der Grundplatte 14 abgewandten Randbereich teilbar. Dieser Randbereich ist bei dem in Fig. 1 und 2 gezeigten Abdrucklöffel als eine nachfolgend detailliert beschriebene Speichelabsaugeinrichtung 64 mit individualisierbarem Rand ausgebildet.

Die Speichelabsaugeinrichtung 64 verläuft, wie in Fig. 1 dargestellt, entlang dem der Grundplatte 14 abgewandten Randbereich von innerer und äußerer Seitenwandung 22 bzw. 16, d.h. wie Fig. 2 zeigt, an dem der Zunge 47 zugewandten Innenrandbereich und an dem der Wange 49 bzw. Lippe zugewandten Außenrandbereich des Abdrucklöffels. Die Speichelabsaugeinrichtung 64 ist aus einem Kunststoffmaterial gefertigt und elastisch verformbar, um einen genauen Sitz sowohl zwischen Zunge 47 und der Schleimhaut 43 an der Zahnreiheninnenseite als auch zwischen der Wange 49 bzw. Lippe und der zahnreihenäußeren Schleimhaut zu gewährleisten.

Da die innere und äußere Seitenwandung 22 und 16 ebenfalls verformbar ausgestaltet sind, können beide leicht an die Speichelabsaugeinrichtung 64 angepaßt und mit dieser verbunden werden. Zu diesem Zwecke weist die Speichelabsaugeinrichtung 64 eine entlang dieser bis zu beiden Enden im Backenzahnbereich verlaufende Nut 72 zur Aufnahme des Randbereichs der Abdruckschale 10 auf. Innerhalb der Nut 72 ist, wie Fig. 2 verdeutlicht, eine Hinterschneidung 74 inerhalb der gesamten Nut 72 ausgebildet, mit der der Randbereich der Abdruckschale 10 mittels eines sich an diesem erstreckenden Rastvorsprungs 76 eingreift. Auf diese Weise wird eine lösbare aber dennoch stabile Verbindung zwischen der Speichelabsaugeinrichtung 64 und der Abdruckschale 10 gebildet.

Eine fluiddichtende Einrichtung 75 ist innerhalb der Nut befindlich, um zwischen der Speichelabsaugeinrichtung 64 und der Abdruckschale 10 ein Entweichen der Abdruckmasse bzw. Eindringen von Umgebungsluft oder Speichel zu verhindern. Diese Dichtungseinrichtung 75 besteht z.B. aus Silikongummi.

In Fortführung der inneren bzw. äußeren Seitenwandung 22 bzw. 16 ist die Speichelabsaugeinrichtung 64 von der Abdruckschale 10 rinnenförmig nach außen gebogen ausgeführt. Innerhalb dieser Rinne weist die Speichelabsaugeinrichtung 64 einen Speichelabsaugkanal 66 mit einer Vielzahl von Absaugöffnungen 68 auf. Der Speichelabsaugkanal ist im Bereich der Backenzähne geschlossen ausgeführt, wie in Fig. 1 angedeutet. Jedoch kann auch der der Zunge 47 zugewandte Teil der Speichelabsaugeinrichtung 64 und der dem Wangenbereich 49 bzw. der Lippe zugeordnete Teil der Speichelabsaugeinrichtung 64 voneinander getrennt angeordnet sein. Der Speichelabsaugkanal 66 ist über einen (nicht gezeigten) Kanal mit einem Anschluß 70 für eine (nicht gezeigte) Speichelabsaugpumpe verbunden. Der Anschluß 70 ist an der Handhabe, d.h. sich aus dem Mund heraus erstreckend angeordnet. Somit ist ein leichtes Anschließen der Speichelabsaugpumpe möglich.

Ein Dichtungs- und Ausgleichselement 48 zur verbesserten Adaption ist an der Speichelabsaugeinrichtung 64 derart vorgesehen, daß die Abdruckschale 10 dichtend und paßgenau an der Schleimhaut 43 zur Anlage kommt. Das Dichtungs- und Ausgleichselement besteht aus selbsthärtendem Silikon, welches beim Einsetzen des Abdrucklöffels - vorzugsweise für eine geeignete Anpassung an die anatomischen Gegebenheiten des Kieferbereichs des Patienten in nicht mit Abdruckmaterial gefülltem Zustand - eine individuelle Anpassung bei maximalem Abdichtvermögen gewährleistet.

In Fig. 1 ist das Dichtungs- und Ausgleichselement 48 an der Speichelabsaugeinrichtung 64 direkt angebracht, und zwar innerhalb einer etwa rinnenförmigen Aufnahmeeinrichtung 50. Das Dichtungs- und Ausgleichselement 48 kann jedoch auch direkt an der inneren und äußeren Seitenwandung 22 und 16 angeordnet sein, wenn sichergestellt ist, daß die Schleimhaut 43 an dieser zur Anlage kommt. Das Dichtungs- und Ausgleichselement 48 kann somit auch ohne Verwendung der Speichelabsaugeinrichtung 64 wirksam werden.

Der in Fig. 2 gezeigte Abdrucklöffel besitzt zusätzlich einen Weichteilschutz zum Fernhalten von Zunge und Wangenbereich. Wie Fig. 2 zeigt, ist die rinnenförmig ausgebildete Speichelabsaugeinrichtung 64, welche unmittelbar an die Zunge 47 angrenzt, mit einem Zungenschild 60 versehen, welches verhindert, daß die Zunge 47 in unmittelbaren Kontakt mit dem Abdrucklöffel 68 kommt und möglicherweise die Absaugöffnungen 68 des Speichelabsaugkanals 66 abdeckt. Der Bereich der Speichelabsaugeinrichtung 64, welcher unmittelbar an die Wange 49 bzw. die Lippe angrenzt, ist mit einem Wangenschild 62 versehen, welches die Wange bzw. Lippe fernhält.

Um zu vermeiden, daß der den Zahnabdruck vornehmende Zahnarzt während des Aushärtprozesses den Abdrucklöffel ständig halten oder anpressen muß, ist der Abdrucklöffel mit einer (nicht gezeigten) Fixierungseinrichtung zum Fixieren der Abdruckposition bei der Abdrucknahme versehen.

Der vorstehend beschriebene, an der Schleimhaut 43 gut abgedichtete Abdrucklöffel ermöglicht auch den Einsatz eines Unterdruck-Abdruckverfahrens. Zu diesem Zweck weist der Abdrucklöffel zusätzlich eine Anzahl von Absaugöffnungen im Schneidezahnbereich zum Erzeugen eines Vakuums zwischen der Schleimhaut bzw. dem Zahnfleisch 43 und der Abdruckschale 10 auf. Die Absaugöffnungen sind mittels eines Absaugkanals mit einem Absauganschluß für eine Pumpeinrichtung zur Erzeugung eines Unterdrucks verbunden. Der Absauganschluß ist aus praktischen Gesichtspunkten an der Handhabe ausgebildet. Weiterhin weist der Abdrucklöffel in der Grundplatte mehrere Einspritzöffnungen im Backenzahnbereich zum Zuführen der Abdruckmasse in die Abdruckschale 10 auf. Die noch nicht gefüllte Abdruckschale 10 wird durch den erzeugten Unterdruck in der Abdrucknahmeposition bzw. am Zahnfleisch 43 "angesaugt". Bei gleichzeitigem Erzeugen des Unterdrucks wird durch die Einspritzöffnungen ein flüssiges Abdruckmaterial eingespritzt, welches selbsthärtend ist, und aufgrund seiner hohen Viskosität unmittelbar nach dem Einspritzen einen sehr genauen Zahnabdruck liefert.

Alles in allem gelingt es mit der vorliegenden Erfindung, einen universellen, wiederverwendbaren Abdrucklöffel anzugeben, der die Herstellung eines sehr genauen Zahnabdrucks ermöglicht.

## Patentansprüche

1. Zahnmedizinischer Abdrucklöffel zur Herstellung von Zahnabdrücken mittels einer härtbaren Abdruckmasse, mit einer der Form des menschlichen Ober- bzw. Unterkiefers angepaßten Abdruckschale (10) zur Aufnahme der Abdruckmasse, wobei die Abdruckschale (10) eine dem Kieferbereich angepaßten Grundplatte (14), eine an deren zahnreihenäußeren Randbereich verlaufende äußere Seitenwandung (16) und eine an deren zahnreiheninneren Randbreich verlaufende innere Seitenwandung (22) aufweist,
**gekennzeichnet durch**
eine Speichelabsaugeinrichtung (64), die an dem der Zunge (47) zugewandten Innenrandbereich und/oder an dem der Wange (49) bzw. Lippe zugewandten Außenrandbereich verläuft,
eine lösbare Verbindungseinrichtung (74, 75) zwischen der äußeren und/oder inneren Seitenwandung (16; 22) und der Speichelabsaugeinrichtung (64), und
ein elastisches und/oder verformbares Dichtungs- und Ausgleichselement (48), das bei der Abdrucknahme einen fluiddichten Kontakt zwischen der Abdruckschale (10) und der Schleimhaut bzw. dem Zahnfleisch (43) herstellt.

## Claims

1. A dental impression tray for producing dental impressions by means of a hardenable impression mass, with an impression pan (10) matched to the shape of the human upper or lower jaw for receiving the impression mass, the impression pan (10) having a base plate (14) matched to the jaw region, an outer side wall (16) following a course along the marginal region of the said base plate (14) external to the row of teeth and an inner side wall (22) following a course along the marginal region of the said base plate (14) internal to the row of teeth,
**characterised by**
a saliva-suctioning device (64), which follows a course along the region of the inner margin facing the tongue (47) and/or along the region of the outer margin facing the cheek (49) or lip, a releasable connecting device (74, 75) between the outer and/or inner side wall (16; 22) and
the saliva-suctioning device (64), and
an clastic and/or deformable sealing and equalising member (48) which, when taking the impression, creates a fluid-tight contact between the impression pan (10) and the mucosa or gingiva (43).

## Revendications

1. Porte-empreinte dentaire destiné à la fabrication d'empreintes dentaires au moyen d'une pâte pour empreinte dentaire durcissant, formé par une cuvette à empreinte (10) adaptée à la forme de la mâchoire supérieure ou inférieure de l'homme et destinée à recevoir la pâte pour empreinte dentaire, sachant que la cuvette à empreinte (10) comporte une plaque de base (14), adaptée à la zone de la mâchoire, une paroi latérale extérieure (16) qui s'étend le long du bord extérieur de la rangée de dents et une paroi latérale intérieure (23) qui s'étend le long du bord intérieur de la rangée de dents, **caractérisé par** un aspirateur de salive (64), qui s'étend au niveau du bord intérieur orienté vers la langue (47) et/ou au niveau du bord extérieur orienté vers la joue (49) ou la lèvre, un dispositif d'assemblage (74, 75) amovible entre la paroi latérale extérieure et/ou intérieure (16 ; 22) et l'aspirateur de salive (64), et un élément d'étanchéité et de compensation (48) élastique et/ou déformable qui, pendant la prise d'empreinte, établit un contact étanche aux fluides entre la cuvette à empreinte (10) et la membrane muqueuse ou la gencive (43).
